# EUROPEAN PATENT APPLICATION

(11) **EP 4 624 344 A1**
(43) Date of publication of application: **01.10.2025**
(21) Application number: 23893421.0
(22) Date of filing: 26.09.2023
(51) Int. Cl.: B64U 40/00, B64C 13/30, A63H 27/20

(54) **AIRCRAFT AND DRIVE MECHANISM THEREOF**

(30) Priority: 25.11.2022 CN 202223151249 U
(71) Applicant: Autoflight (Kunshan) Co., Ltd., Suzhou, Jiangsu 215345 (CN)
(72) Inventor: TIAN, Yu, Suzhou, Jiangsu 215345 (CN); DING, Yu, Suzhou, Jiangsu 215345 (CN); LI, Tao, Suzhou, Jiangsu 215345 (CN)
(74) Representative: MERH-IP Matias Erny Reichl Hoffmann Patentanwälte PartG mbB
(86) International application number: PCT/CN2023/121459
(87) International publication number: WO 2024/109329

(57) **Abstract**

The present invention relates to the technical field of aircraft, disclosing an aircraft and its drive mechanism, the drive mechanism comprising a driving device, a bending connecting rod and a rudder surface. The drive device connects the rudder face and drives the rudder face to rotate by a curved connecting rod, wherein the bending connecting rod comprises at least one helical bending rod in the middle part and is connected to the drive unit and the rudder face at both ends, respectively. The bending connecting rod structure of the present invention can appropriately reduce the axial stiffness, thereby effectively reducing the shock load of the servo on the servo and extending the service life of the servo.

## Description

### FIELD OF THE DISCLOSURE

The present invention relates to the technical field of aircraft, in particular to an aircraft and its drive mechanism.

### BACKGROUND OF THE INVENTION

As an important component of the UAV, the servo is both an actuator and an important part of the UAV's flight control loop. The various tilting attitudes of the aircraft are driven by the servo, so the normal operation of the servo is very important for the drone. The servo connecting rod is a mechanical structure that connects the servo and the drone-controlled rudder surface, and transmits the steering force and torque to the rudder surface. In the current UAV control system, the UAV qigong rudder face rocker arm is connected to the servo through the connecting rod, however, because the connecting rod and the rocker arm is a rigid connection, that is, usually a straight rod connection, when the UAV flights, when the rudder surface is disturbed by airflow, an impulse will be applied to the connecting rod, causing the rudder surface to oscillate around the shaft, the swing vibration load on the pneumatic rudder surface will act on the servo through the straight rod, the swing vibration load is an irregular alternating load, which will cause fatigue damage or even damage to the servo structure, However, the tooth fatigue resistance of the servo transmission gear is poor, and in production practice, tooth damage and fracture often occur, which has a serious adverse impact on the flight safety of UAVs.

### SUMMARY OF THE INVENTION

The object of the present invention is to provide an aircraft and its drive mechanism, the bending linkage structure of the present invention can appropriately reduce the axial stiffness thereby effectively reducing the shock load of the rudder to the servo, and prolonging the service life of the servo.

To solve the above technical problems, the present invention provides a drive mechanism, comprising: a drive device, a bending connecting rod and a rudder surface; The drive device connects the rudder face through the bending connecting rod and drives the rudder face to rotate, wherein the bending connecting rod comprises at least one circle of spiral bending rod in the middle part and is connected to the drive device and the rudder surface at both ends, respectively.

Preferably, the bending connecting rod forms two turns of spiral bending rod in the middle portion.

Preferably, the bending connecting rod comprises a first extension straight rod in front of the spiral bending rod, the first extension straight rod is connected to the drive device, the bending connecting rod comprises a second extension straight rod after the spiral bending rod, and the second extension straight rod is connected to the rudder surface.

Preferably, the first extension straight rod is disposed parallel to the second extension straight rod and does not intersect.

Preferably, the output end of the drive device is provided with a rocker arm, the first extension straight rod rotates to connect the rocker arm, the drive device drives the rocker arm to swing, and drives the rudder surface to rotate through the bending linkage.

Preferably, the end of the first extension straight rod is provided with a first fixing part, the first extension straight rod is connected to the rocker arm through the first fixing part, the second extension straight rod is provided with a second fixing part, and the second extension straight rod is connected to the rudder surface through the second fixing part.

Preferably, the rocker arm is provided with a through-hole, and the first fixing part can be provided through the through-hole to form a rotating connection with the rocker arm.

Preferably, the rocker arm is provided with a plurality of through holes spaced along the length direction.

Preferably, the spiral bending rod is connected with the first extension straight rod and the second extension straight rod in one piece.

The bending connecting rod structure of the present invention can appropriately reduce the axial stiffness, thereby effectively reducing the shock load of the servo on the servo and extending the service life of the servo.

### BRIEF DESCRIPTION OF DRAWINGS

FIG. 1 shows a schematic diagram of the structure of the drive mechanism of the embodiment of the present invention;
FIG. 2 shows a local magnification of position A in Figure 1;
FIG. 3 shows a side view of the drive mechanism of an embodiment of the present invention;
FIG. 4 shows a schematic view of the structure of a drive mechanism of another embodiment of the present invention.

### DETAILED DESCRIPTION

In order to make the purpose, technical solution and advantages of the present invention clearer, the embodiments of the present invention will be described in detail in conjunction with the accompanying drawings. However, those of ordinary skill in the art may understand that in various embodiments of the present invention, in order to better understand the reader of the present invention is proposed a number of technical details. However, even without these technical details and various changes and modifications based on the following embodiments, the technical solution claimed by each claim of the present invention may be realized.

Unless the context otherwise requires, throughout the description and claims, the words "including" and its variants, such as "including" and "with" should be understood as having an open, inclusive meaning, i.e. shall be construed as "including, but not limited to".

The following will be combined with the accompanying drawings of each embodiment of the present invention in detail, in order to more clearly understand the object, features and advantages of the present invention. It should be understood that the embodiments shown in the drawings are not a limitation of the scope of the present invention, but only to illustrate the substance of the technical solution of the present invention.

A reference to "one embodiment" or "one embodiment" throughout the description indicates that the particular feature, structure or feature described in the embodiment is included in at least one embodiment. Thus, the occurrence of "in one embodiment" or "in one embodiment" in various positions throughout the specification need not all refer to the same embodiment. Further, particular features, structures or features may be combined in any way in one or more embodiments.

The singular forms "I" and "the the" as used in the description and accompanying claims include plural references, unless expressly provided otherwise. It should be noted that the term "or" is usually used in the sense that it includes "and/or", unless expressly stated otherwise.

In the following description, in order to clearly demonstrate the structure and working mode of the present invention, a number of directional words will be used, but the words "front", "back", "left", "right", "outside", "inside", "outward", "inward", "up", "down" and so on should be understood as convenient terms, and should not be understood as qualifying words.

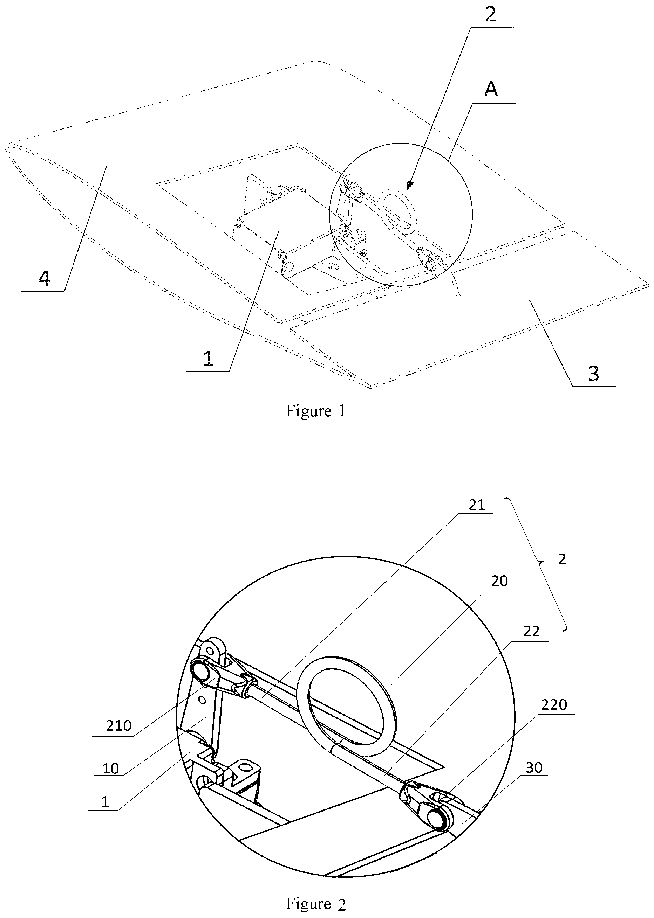

The embodiment of the present invention is described hereinafter with reference to the accompanying drawings, as shown in FIG. 1 - FIG. 3, the drive mechanism of the embodiment of the present invention comprises: a drive device 1, a bending connecting rod 2 and a rudder surface 3, the drive device 1 is connected to the rudder surface 3 by bending the connecting rod 2 and drives the rudder surface 3 to rotate, wherein the bending connecting rod 2 comprises a circle of spiral bending rod 20 in the middle portion and is connected to the drive device 1 and rudder surface 3 at both ends, respectively.

Specifically, the bending connecting rod 2 in front of the spiral bending rod 20 further comprises a first extension straight rod 21, the first extension straight rod 21 is connected to the drive device 1. Specifically, the output end of the drive device 1 is provided with a rocker arm 10, the end of the first extension straight rod 21 away from the spiral bending rod 20 is provided with a first fixing part 210, and the first extension straight rod 21 is connected with the rocker arm 10 by a first fixing part 210. The rocker arm 10 is provided with a through hole 100, and the first fixing part 210 surrounds both sides of the rocker arm 10 and passes through the through hole 100 through the bolt, thereby forming a rotating connection with the rocker arm 10.

The bending link 2 after the spiral bending rod 20 further comprises a second extension straight rod 22, and the second extension straight rod 22 is connected to the rudder surface 3. Specifically, the end of the second extension straight rod 22 away from the spiral bending rod 20 is provided with a second fixing part 220, and the second extension straight rod 22 is connected by a second fixing part 220 and the fixed seat 30 of the rudder surface 3. The second fixing part 220 surrounds both sides of the base 30 of the rudder surface 3 and passes through the base 30 by bolts, thereby forming a rotating connection with the base 30 of the rudder surface 3.

One end of rudder surface 3 rotates and is connected to the aircraft, and the drive device 1 drives the rocker arm 10 to swing, and can drive the rudder face 3 to rotate by bending the connecting rod 2.

Further, the first fixing part 210 and the second fixing part 220 may be provided as a spherical bearing, the joint bearing and the servo rocker arm 10 rigidly connected, can form a certain degree of rotational freedom, thereby avoiding the possible displacement of the connecting rod through the rocker arm damage the servo shaft.

The first extension straight rod 21 and the second extension straight rod 22 can produce relative motion through the elastic deformation of the spiral bending rod 20, thereby buffering and absorbing the sudden external force, avoiding the connecting rod from damaging the servo shaft through the rocker arm, thereby avoiding the servo damage and extending the service life of the servo.

Further, the first extension straight rod 21 and the second extension straight rod 22 are disposed parallel and do not intersect, thereby not changing the direction of force transmission, reducing the stiffness of the straight bar without reducing the magnitude of the force.

Further, the rocker arm 10 is provided with a plurality of through holes 100 spaced along the length direction, and the bolts of the first fixing part 210 can be connected with the rocker arm 10 through any through hole 100, so that the position of the first fixing part 210 on the rocker arm 10 can be adjusted to meet the needs of the drive device. It is worth noting that different through-hole 100 settings, can adapt to different length and short sizes of bending connecting rod 2, when the bending linkage 2 is too short or too long, you can choose different positions on the rocker arm 10 to adjust.

Further, the spiral bending rod 20 and the first extension straight rod 21 and the second extension straight rod 22 may be a one-piece connection. Therefore, the one-piece bending connecting rod 2 has a stable structure, convenient manufacturing, strong cushioning capacity, and avoids the loosening that may occur when the split connection is avoided.

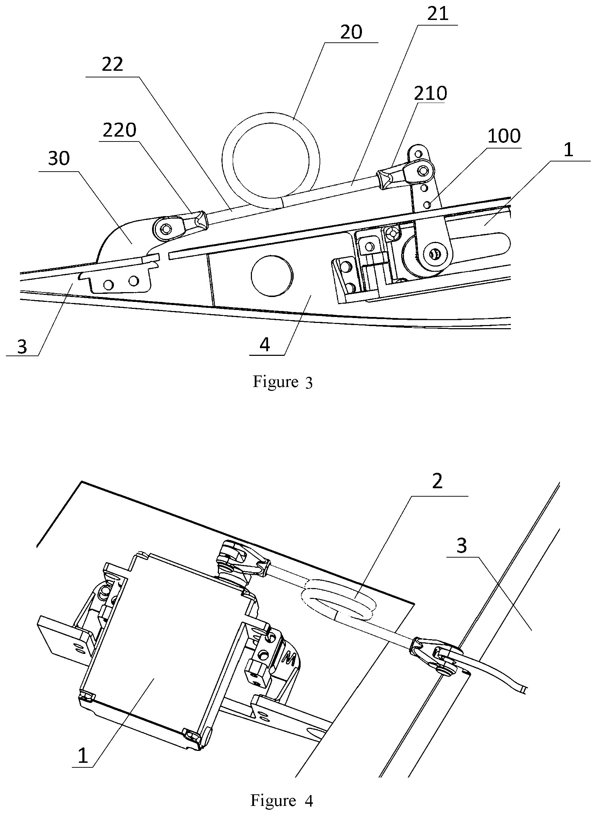

Further, as shown in FIG. 4, the bending linkage 2 comprises two turns of spiral bending rod 20 in the middle portion. The two-turn spiral bending rod has stronger fastness than the single spiral bending rod ring, is not easy to break, and the test life is at least 4 times that of the single turn.

The present embodiment further provides an aircraft, the aircraft comprises a drive mechanism as described above, further comprising a fuselage 4, a drive device 1 disposed on the fuselage 4, and one end of the rudder surface 3 rotates on the fuselage 4, thereby appropriately reducing the axial stiffness through the bending linkage structure of the drive mechanism, thereby effectively reducing the shock load of the rudder on the servo and extending the service life of the servo.

The above embodiments only illustrate the principle of the present invention and its efficacy, and are not intended to limit the present invention. Any person familiar with this technique may modify or modify the above embodiments without prejudice to the purpose of the invention of this invention. Thus, all equivalent modifications or alterations performed by persons with ordinary knowledge in the subject art without departing from the purpose disclosed in the present invention shall still be covered by the claims of the present invention.

## Claims

1. A drive mechanism comprising: a drive device (1), a bending connecting rod (2), and a rudder surface (3),
wherein the drive device (1) is connected to the rudder surface (3) by the bending connecting rod (2) and drives the rudder surface (3) to rotate, wherein the bending connecting rod (2) comprises at least one circle of spiral bending rod (20) in the middle portion and is connected to the drive device (1) and to the rudder surface (3) at both ends, respectively.

2. The drive mechanism according to claim 1, wherein the bending connecting rod (2) comprises two turns of spiral bending rod (20) in the middle portion.

3. The drive mechanism according to claim 1, wherein the bending connecting rod (2) comprises a first extension straight rod (21) before the spiral bending rod (20), the first extension straight rod (21) is connected to the drive device (1), the bending connecting rod (2) comprises a second extension straight rod (22) after the spiral bending rod (20), and the second extension straight rod (22) is connected with the rudder surface (3).

4. The drive mechanism according to claim 3, wherein the first extension straight rod (21) is disposed parallel to the second extension straight rod (22) and does not intersect.

5. The drive mechanism according to claim 3, wherein an output end of the drive device (1) is provided with a rocker arm (10), the first extension straight rod (21) rotates to connect the rocker arm (10), the drive device (1) drives the rocker arm (10) to swing, and drives the rudder surface (3) to rotate through the bending connecting rod (2).

6. The drive mechanism according to claim 5, wherein an end of the first extension straight rod (21) is provided with a first fixing part (210), the first extension straight rod (21) is connected to the rocker arm (10) through the first fixing part (210), the second extension straight rod (22) is provided with a second fixing part (220), and the second extension straight rod (22) is connected to the rudder surface (3) through the second fixing part (220).

7. The drive mechanism according to claim 6, wherein the rocker arm (10) is provided with a through hole (100), and the first fixing part (210) can penetrate the through hole (100) and the rocker arm (10) to form a rotating connection.

8. The drive mechanism according to claim 7, wherein the rocker arm (10) is provided with a plurality of through-holes (100) spaced along its length direction.

9. The drive mechanism according to claim 3, wherein the spiral bending rod (20) is connected in one piece with the first extension straight rod (21) and the second extension straight rod (22).

10. An aircraft comprising the drive mechanism according to any one of claims 1-9, the aircraft further comprises a fuselage, the drive device (1) is disposed on the fuselage, and one end of the rudder surface (3) rotates to the fuselage.
